# DEMANDE DE BREVET EUROPEEN

(11) **EP 1 600 674 A1**
(43) Date de publication de la demande: **30.11.2005**
(21) Numéro de dépôt: 04102322.7
(22) Date de dépôt: 26.05.2004
(51) Int. Cl.: F16K 1/30

(54) **Robinet pour cylindre de gaz**

(71) Demandeur: LUXEMBOURG PATENT COMPANY S.A., 7440 Lintgen (LU)
(72) Inventeur: Kremer, Paul, 7263, Walferdange (LU)
(74) Mandataire: Weydert, Robert

(57) **Abrégé**

Le robinet pour cylindre de gaz ou de gaz liquéfié comporte un corps de robinet (10) dans lequel une tige de robinet (16) et un élément de fermeture (14) sont montés directement sans l'intermédiaire d'une étoupe, un siège fixe du robinet est formé sur un tube de siège (12) séparé du corps de robinet (10), et la tige de robinet (16), l'élément de fermeture (14) et le tube de siège (12) sont assemblés de façon échangeable dans le corps de robinet (10) à partir de l'extrémité d'embase (10-2) de celui-ci.

## Description

La présente invention se rapporte à un robinet pour cylindre de gaz ou de gaz liquéfié comportant un corps de robinet, un siège fixe, un élément de fermeture mobile pour ouvrir et fermer le robinet et une tige de robinet pour mouvoir l'élément de fermeture entre la position fermée et la position ouverte.

Un robinet de ce type est bien connu dans la technique antérieure. Les robinets connus du type cité ci-avant ont normalement un siège fixe formé d'une seule pièce avec le corps de robinet. La tige de robinet et l'élément de fermeture sont normalement assemblés dans le corps de robinet par l'extrémité de tête de celui-ci et un bouchon ou une étoupe est habituellement prévu entre la tige de robinet et le corps de robinet formant ainsi au moins deux interstices annulaires interfaciaux, c'est-à-dire un premier entre le bouchon et la tige et un second entre le bouchon et le corps de robinet qu'il faut étanchéifier pour éviter une fuite de gaz à l'extrémité de tête du corps de robinet.

La présente invention a pour objet de fournir un robinet perfectionné, de construction simplifiée, qui ne présente pas les désavantages cités ci-avant.

A cet effet, il est proposé conformément à l'invention un robinet pour cylindre de gaz ou de gaz liquéfié, comportant un corps de robinet ayant un axe longitudinal, une extrémité d'embase et une extrémité de tête, et un alésage longitudinal débouchant à l'extrémité de tête du corps de robinet ; un siège fixe ; et un ensemble tige de robinet - élément de fermeture monté étanche dans l'alésage longitudinal et mobile pour ouvrir et fermer le robinet ;
caractérisé en ce qu'à l'intérieur de l'alésage longitudinal l'ensemble tige de robinet - élément de fermeture n'est supporté que par le corps de robinet qui l'entoure directement afin de ne présenter qu'un seul interstice annulaire interfacial à étanchéifier pour éviter une fuite de gaz à l'extrémité de tête du corps de robinet ; en ce que l'alésage longitudinal s'étend jusqu'à l'extrémité d'embase, débouche à celle-ci et a un diamètre suffisant de sorte que l'ensemble tige de robinet - élément de fermeture puisse être installé dans le corps de robinet par l'extrémité de l'alésage longitudinal débouchant à l'extrémité d'embase du corps de robinet ; et en ce que le siège fixe est formé sur un élément de siège séparé du corps de robinet installé dans l'alésage longitudinal par l'extrémité d'embase du corps de robinet.

De préférence l'élément de siège est un tube de siège allongé remplaçable vissé dans l'alésage longitudinal et le tube de siège a une tête élargie accessible à l'extrémité d'embase du corps de robinet pour le serrage et le desserrage du tube de siège.

Selon un autre avantage de l'invention un clapet de sûreté monté dans le corps de robinet peut communiquer avec l'extérieur du robinet à l'extrémité d'embase de celui-ci au moyen d'un passage de gaz annulaire formé dans l'alésage longitudinal entre le tube de siège et le corps de robinet. Donc, le besoin de former dans l'embase du corps de robinet en plus du passage de gaz normal un autre passage de raccordement au clapet de sûreté est évité.

En vue de retenir l'ensemble mobile dans l'alésage longitudinal une surface de butée axiale faisant face axialement vers l'élément de siège est formée entre deux parties à diamètre différent de l'alésage longitudinal, et une surface de contre-butée axiale est formée sur l'ensemble mobile entre la surface de butée axiale et l'élément de siège, cette surface de contre-butée axiale faisant vers la surface de butée axiale.

Plusieurs modes d'exécution de l'ensemble mobile sont possibles. Il peut être vissé dans l'une ou l'autre des deux parties à diamètres différents de l'alésage longitudinal et aussi ajusté dans l'une ou l'autre de ces deux parties à diamètres différents. En outre, l'ensemble mobile comportant la tige de robinet et l'élément de fermeture peut être formé d'une seule pièce ou de deux pièces différentes couplées ensemble et mobiles axialement ou rotativement l'une par rapport à l'autre.

De préférence l'élément de fermeture de l'ensemble mobile est une pièce séparée de la tige de robinet, ces deux pièces sont solidarisées en rotation l'une avec l'autre mais l'élément de fermeture est déplaçable axialement par rapport à la tige de robinet et l'élément de fermeture est vissé dans la partie de plus grand diamètre de l'alésage longitudinal alors que la tige de robinet est ajustée dans les deux parties à diamètres différents de l'alésage longitudinal.

L'élément de fermeture peut être vissé dans la même partie filetée de l'alésage longitudinal que le tube de siège.

Un autre objet de l'invention est de fournir un robinet pourvu d'un dispositif simple et efficace pour indiquer la position ouverte ou fermée du robinet.

Selon la présente invention cet objet est atteint par un robinet pour cylindre de gaz ou de gaz liquéfié, comportant un corps de robinet, un ensemble tige de robinet - élément de fermeture mobile entre une position fermée et une position ouverte, et un élément annulaire solidarisé en rotation avec la tige de robinet et situé à l'extérieur du corps de robinet, caractérisé par une bague externe disposée autour du corps de robinet et retenue contre rotation par rapport à celui-ci, cette bague étant montée par un moyen d'engagement hélicoïdal sur l'extérieur de l'élément solidarisé en rotation avec la tige de robinet, de sorte que la bague effectue un mouvement axial télescopique par rapport à l'élément annulaire et la tige de robinet en réponse à un mouvement de rotation de la tige de robinet en vue de couvrir ou de découvrir un moyen d'indication de la position ouverte ou fermée du robinet.

Le moyen d'indication de position est immobile par rapport au corps de robinet et peut être une simple bande colorée appliquée directement sur le corps de robinet ou à n'importe quelle pièce appropriée fixée à celui-ci de façon à ce qu'elle soit couverte par la bague lorsque le robinet est en position ouverte et exposée lorsque le robinet se trouve dans sa position fermée. Alternativement, le moyen d'indication de position peut aussi être formé par l'élément annulaire solidarisé en rotation avec la tige de robinet. Cet élément est caché par la bague lorsque le robinet est en position fermée et exposé au moins en partie lorsque le robinet est en position ouverte. Si cet élément annulaire sert d'indicateur de position il aura une couleur de signalisation qui se distingue des éléments avoisinantes du robinet.

De préférence la bague est pourvue d'un filet interne engagé sur un filet externe de l'élément solidarisé en rotation avec la tige de robinet et afin de produire un mouvement axial substantiel de la bague le pas du filet entre la bague et l'élément annulaire peut être plus élevé que le pas d'un filet du corps de robinet dans lequel l'ensemble mobile est vissé.

Pour compléter la construction du robinet un volant est solidarisé à la tige de robinet pour rotation avec celle-ci. De préférence ce volant est une pièce séparée de l'élément annulaire et une rainure d'affaiblissement est formée dans la tige de robinet à l'interface entre le volant et l'élément annulaire. Si une force de torsion, ou autre force, dépassant une limite prédéterminée est appliquée au volant la tige de robinet sera sectionnée à l'endroit de la rainure d'affaiblissement et le robinet restera fonctionnel et peut être ouvert ou fermé par manipulation de l'élément annulaire.

L'invention sera maintenant expliquée en plus grand détail en référence aux dessins annexés sur lesquels :
la figure 1 montre le robinet selon l'invention en position ouverte,
la figure 2 montre le robinet selon l'invention en position fermée,
la figure 3 montre la partie inférieure du robinet des figures 1 et 2, en coupe longitudinale dans un plan orienté 90° par rapport au plan de dessin de la figure 1, et
la figure 4 est une vue en coupe transversale selon la figure 4-4 de la figure 2.

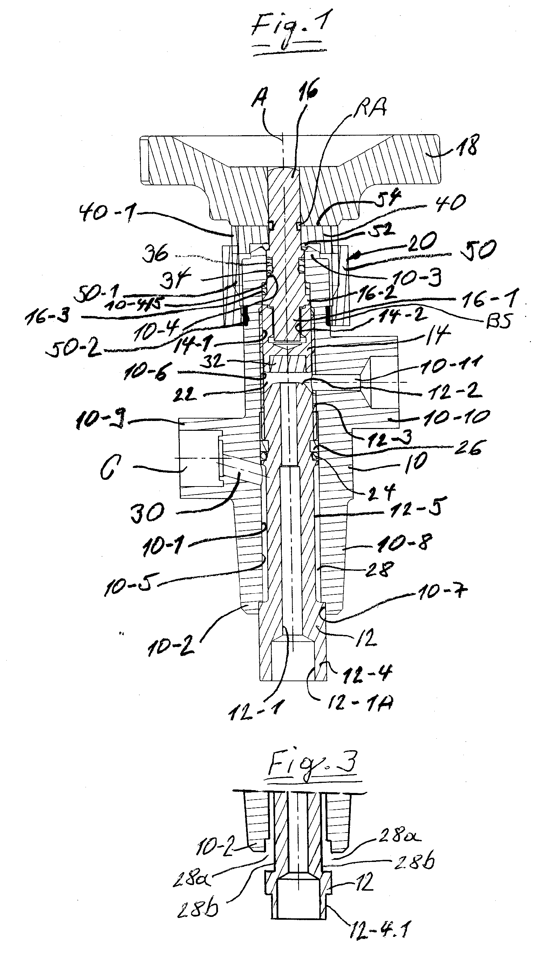

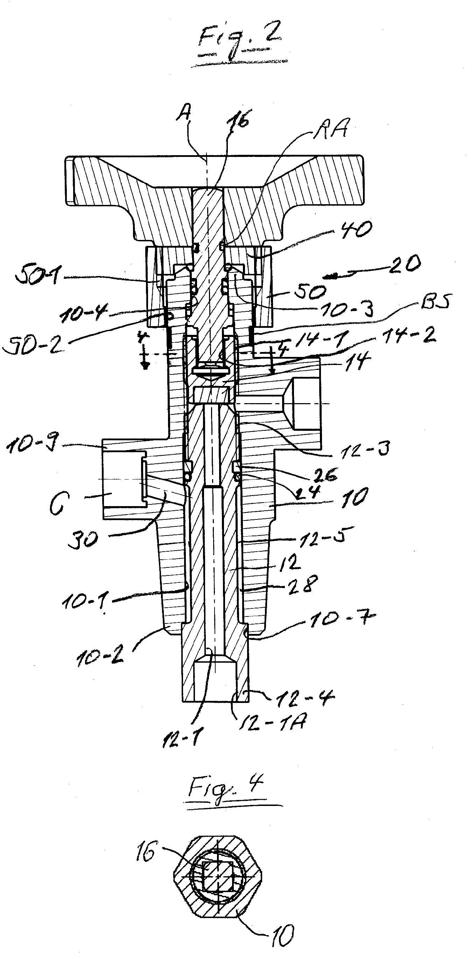

Se référant maintenant aux figures 1 et 2 qui montrent le robinet en position debout en coupe longitudinale, on peut voir qu'il comporte un corps de robinet 10, un tube de siège allongé fixe 12, un élément de fermeture mobile 14, une tige de robinet 16, un volant 18 et un dispositif d'indication de position 20.

Le corps de robinet 10 a un axe longitudinal A et un alésage central longitudinal 10-1 traversant le corps 10 complètement d'un bout à l'autre, c'est-à-dire de l'extrémité d'embase 10-2 à l'extrémité de tête 10-3 et débouchant à ces deux extrémités du corps de robinet 10. L'alésage longitudinal 10-1 est pourvu à proximité de l'extrémité de tête 10-3 du corps 10 d'une partie à diamètre réduit 10-4 qui est relativement courte en direction axiale par rapport à la longueur totale de l'alésage longitudinal 10-1. La majeure partie 10-5 de l'alésage longitudinal 10-1 s'étendant de la partie à diamètre réduit 10-4 jusqu'à l'extrémité d'embase 10-2 du corps de robinet 10 a un plus grand diamètre que la partie à diamètre réduit 10-4. La majeure partie 10-5 à plus grand diamètre de l'alésage longitudinal 10-1 est pourvue d'un filetage interne 10-6. Entre le filetage interne 10-6 et la partie à diamètre réduit 10-4 le diamètre de l'alésage longitudinal 10-1 est approximativement égal et de préférence un peu plus petit que le diamètre interne du filet 10-6 et entre le filet 10-6 et un contre-alésage 10-7 à l'extrémité d'embase 10-2 le diamètre de l'alésage longitudinal 10-1 est approximativement égal au et de préférence un peu plus grand que le diamètre de base du filet 10-6. Une surface de butée axiale 10-4/5 faisant face en direction axiale vers l'extrémité d'embase 10-2 ou vers le tube de siège 12 est formée entre les deux parties 10-4 et 10-5 à diamètre différent de l'alésage longitudinal 10-1.

Le corps de robinet 10 est également pourvu à son extrémité d'embase 10-2 d'un filetage externe conique 10-8 pour raccordement à un récipient de gaz ou de gaz liquéfié (non-représenté). Pour une autre application ce filetage pourrait avoir une forme cylindrique.

Le corps de robinet 10 a sur son côté gauche un raccord cylindrique 10-9 s'étendant latéralement et pourvu d'une cavité C pour recevoir un clapet de sûreté (non-représenté). Sur son côté droit le corps de robinet 10 a un autre raccord cylindrique 10-10 s'étendant latéralement auquel un dispositif de consommation de gaz ou un dispositif de remplissage (non-représenté) peut être raccordé. Les deux raccords 10-9 et 10-10 sont pourvus chacun d'un filet externe.

Disposés dans l'alésage longitudinal 10-1 et alignés le long de l'axe longitudinal A sont le tube de siège 12, l'élément de fermeture 14 et la tige de robinet 16. Une chambre de vanne 22 est délimitée dans l'aléasage longitudinal 10-1 entre le tube de siège 12 et l'élément de fermeture mobile 14. Le tube de siège 12 est traversé de son extrémité inférieure vers son extrémité supérieure d'un passage d'écoulement de gaz 12-1 qui est en communication avec la chambre de vanne 22 dans la position ouverte du robinet. Un autre passage de gaz 10-11 est pratiqué dans le corps de robinet 10 et ce passage 10-11 est en communication avec la chambre de vanne 22 et débouche à l'extrémité libre du raccord 10-10 du corps de robinet 10.

Le tube de siège 12 est disposé dans l'alésage 10-1 et il est pourvu à son extrémité supérieure d'un siège fixe 12-2 entourant le passage de gaz 12-1. Le tube de siège 12 est pourvu d'un filet externe 12-3 à proximité de son extrémité supérieure qui est vissé dans le filet 10-6 de l'alésage longitudinal 10-1. A son autre extrémité, c'est-à-dire à l'extrémité inférieure, le tube de siège 12 est pourvu d'une tête élargie 12-4 qui est engagée dans le contre-alésage 10-7 et qui en contact avec la surface de fond de celle-ci si le tube de siège 12 est engagé à fond et serré dans l'alésage 10-1 du corps de robinet 10. La tête 12-4 est prévue sur ses côtés opposés de deux surfaces aplaties parallèles 12 - 4.1 (voir figure 3) pour pouvoir appliquer un outil de serrage approprié. A cet effet, la majeure partie de la tête 12-4 reste exposée en-dessous de l'embase à l'extérieur du contre-alésage 10-7 si le tube de siège 12 est assemblé au corps de robinet 10.

Le tube de siège 12 est encore pourvu d'une bague d'étanchéité 24 disposée dans une rainure circonférentielle externe du tube 12 pour empêcher une fuite de gaz entre le tube 12 et le corps de robinet 10. A côté de la bague d'étanchéité 24 également engagée dans une rainure du tube 12 se trouve une bague de support 26 pour la bague d'étanchéité 24. Entre la rainure de la bague d'étanchéité 24 et la tête élargie 12-4 le tube de siège 12 est pourvu d'une partie allongée à diamètre réduit 12-5. Cette partie à diamètre réduit 12-5 et la surface interne de l'alésage longitudinal 10-1 délimitent un passage de gaz annulaire 28 qui, à l'extrémité d'embase 10-2 est en communication avec l'extérieur du robinet par les orifices 28a formés par des surfaces aplaties parallèles 28b (répresentées dans la figure 3) de la tête élargie 12-4. A son extrémité supérieure le passage annulaire 28 est en communication par un passage oblique 30 avec la cavité C pour le clapet de retenue (non-représenté).

Le passage de gaz 12-1 est pourvu à son extrémité inférieure dans la tête élargie 12-4 d'un contre-alésage fileté 12-1A pour permettre le raccordement d'un tube plongeur (non-représenté).

L'élément de fermeture mobile 14 est pourvu d'un filet externe 14-1 qui est vissé dans le filet 10-6 de l'alésage longitudinal 10-1 au-dessus du tube de siège 12. L'élément de fermeture mobile est pourvu d'une garniture d'étanchéité 32 qui est en contact étanche avec le siège fixe 12-2 en position fermée du robinet. L'élément de fermeture mobile 14 est aussi pourvue de son autre extrémité d'une cavité axiale 14-2 non-circulaire en section transversale, de préférence carrée, pour recevoir un tenon axial 16-1 de forme correspondante de la tige de robinet 16. La tige de robinet 16 s'étend vers le haut hors du corps de robinet 10 et elle est reçue en rotation au moyen d'un ajustement glissant dans la partie à diamètre réduit 10-4 de l'alésage longitudinal 10-1. Disposé dans une rainure de la tige de robinet 16 sont une bague d'étanchéité 34 et sa bague d'appui 36 pour prévenir une fuite de gaz entre la tige 16 et le corps de robinet 10.

La tige de robinet est encore pourvue d'une collerette 16-2 formant palier radial qui se trouve axialement entre le tenon 16-1 et la rainure de la bague d'étanchéité 34 et qui est engagée dans l'alésage longitudinal 10-1 entre la butée axiale 10-4/5 de l'alésage longitudinal 10-1 et l'extrémité supérieure du filet 10-6 de l'alésage longitudinal 10-1. Cette collerette 16- 2 a un diamètre externe plus grand que le diamètre de la partie à diamètre réduit 10-4 et approximativement égal au diamètre de la majeure partie 10-5 de l'alésage longitudinal 10-1 en haut du filet 10-6. La collerette 16-2 est reçue par un ajustement glissant dans la partie à plus grand diamètre 10-5 de l'alésage longitudinal 10-1. La collerette 16-2 est pourvue en haut d'une surface de contre-butée axiale 16-3 faisant face axialement vers la surface de butée 10-4/5 et coopérant avec celle-ci pour retenir la tige de robinet 16 dans l'alésage longitudinal 10-1.

Pour assembler le robinet, la tige de robinet 16 et l'élément de fermeture mobile 14 sont d'abord installés dans le corps de robinet 10 en vissant l'élément de fermeture mobile 14 dans le filet 10-6 de l'alésage longitudinal 10-1. Lors de cet assemblage la tige de robinet 16 est reçue dans la partie à diamètre réduit 10-4 et une partie de la tige 16 s'étend vers le haut du corps de robinet 10 et au-delà de l'extrémité de tête 10-3 de celui-ci. La tige de robinet 16 est logée pour rotation directement et uniquement dans la partie à diamètre réduit 10-4 et la partie à plus grand diamètre 10-5 de l'alésage 10-1. Par conséquent, une étoupe n'est plus nécessaire entre la tige 16 et le corps de robinet 10. La tige de robinet 16 est retenue en position par la butée 10-4/5 formée entre les parties 10-4 et 10-5 de l'alésage 10-1 en coopération avec la contre-butée 16-3 de collerette 16-2. Parce que la tige de robinet 16 et l'élément de fermeture 14 ne sont supportés que par le corps de robinet 10 qui les entoure directement le robinet ne comporte qu'un seul interstice annulaire interfacial à étanchéifier pour éviter une fuite de gaz à l'extrémité de tête du corps de robinet 10.

Ensuite le tube de siège 12 est également introduit par l'extrémité d'embase 10-2 et son filet externe 12-3 est vissé dans le filet interne 10-6 de l'alésage longitudinal 10-1. Le tube de siège 12 est serré par l'application d'un couple prédéterminé à la tête 12-4 de sorte que cette partie de tête 12-4 soit engagée fermement contre le fond du contre-alésage 10-7.

Pour ouvrir ou fermer le robinet la tige 16 est tournée au moyen du volant 18. La tige ne se déplace pas en direction verticale mais son mouvement de rotation est transmis à l'élément de fermeture 14 qui grâce à son engagement fileté dans l'alésage 10-1 effectue un mouvement axial pour ouvrir ou fermer le robinet.

Comme alternative du mode d'exécution qui vient d'être décrit ici-avant et qui est représenté sur les figure 1 et 2, la tige de robinet pourrait aussi avoir un filet externe vissé dans un filet interne de la partie à diamètre réduit 10-4 et l'élément de fermeture mobile 14 pourrait être guidé par un ajustement glissant dans l'alésage longitudinal 10-1 au lieu de l'engagement fileté représenté sur les figures 1 et 2. Dans ce cas la tige 16 se déplace verticalement lors de l'ouverture et la fermeture du robinet et ce mouvement vertical est transmis à l'élément de fermeture mobile par un raccord couplant la tige et l'élément de fermeture pour mouvement axial commun mais permettant une rotation de la tige par rapport à l'élément de fermeture au lieu du raccord formé par la cavité 14-2 et le tourillon 16-1 carrés qui permettent un mouvement axial relatif entre la tige 16 et l'élément de fermeture 14 mais qui couplent la tige 16 et l'élément de fermeture 14 pour rotation l'un avec l'autre.

Selon encore un autre mode d'exécution la tige de robinet 16 et l'élément de fermeture 14 peuvent être réalisés en une seule pièce déplaçable verticalement, rotative ou non-rotative. La pièce unique rotative constituant la tige de robinet 16 et l'élément de fermeture 14 pourraient aussi avoir un filet externe engagé dans un filet interne de l'alésage longitudinal.

Dans tous ces cas le tube de siège 12 et l'ensemble mobile comportant la tige de robinet 16 et l'élément de fermeture 14 peuvent être assemblés dans le corps de robinet 10 à partir de l'extrémité d'embase 10-2 et l'ensemble mobile est supporté directement et uniquement dans l'alésage longitudinal 10-1 sans l'intermédiaire d'une étoupe ou d'un bouchon entre la tige de robinet 16 et le corps de robinet 10.

En outre, l'alésage longitudinal pourrait avoir deux parties filetées à diamètre différent, c'est-à-dire une première partie filetée pour l'élément de fermeture mobile 14 et une seconde partie filetée de plus grand diamètre pour le tube de siège 12.

Le dispositif d'indication de position 20 de la présente invention sera maintenant expliqué en plus grand détail en référence aux figures 1 et 2.

Ce dispositif d'indication de position comporte un élément annulaire 40 solidarisé en rotation avec la tige de robinet 16 au-dessus de l'extrémité de tête 10-3 du corps de robinet 10 et une bague externe 50 disposée autour du corps de robinet 10 à son extrémité de tête et retenue contre rotation par rapport au corps de robinet 10. La bague 50 est pourvue d'un moyen d'engagement hélicoïdal approprié, de préférence un filet interne 50-1, vissé sur un filet externe 40-1 de l'élément annulaire 40. A son extrémité inférieure la bague externe 50 a une partie polygonale, de préférence hexagonale, 50-2 qui entoure une partie de forme correspondante (voir figure 4) à l'extrémité de tête 10-3 du corps de robinet 10. De cette façon, la bague 50 est empêchée de tourner par rapport au corps de robinet 10 et lorsque la tige 16 est tournée dans l'une ou l'autre direction la bague 50 effectue un mouvement axial dans l'une ou l'autre direction le long de l'axe longitudinal A et se déplace de façon télescopique sur l'élément annulaire 40 et le corps de robinet 10.

Selon un mode d'exécution une bande de signalisation BS, d'une couleur facilement remarquable, telle qu'une couleur rouge ou verte, est appliquée sur la surface externe de la partie de tête 10-3 du corps de robinet 10 en une position appropriée de sorte qu'elle soit cachée par la bague 50 si le robinet est en position ouverte et soit exposée et facilement remarquable en bas de la bague 50 si le robinet est en position fermée. Alternativement, au lieu de cette bande de signalisation (non-représentée) l'élément annulaire 40 pourrait être le moyen d'indication de position et pourrait indiquer la position ouverte, représentée en figure 1, dans laquelle une partie de l'élément annulaire 40 est exposée en haut de la bague 50, ou la position fermée, représentée dans la figure 2, dans laquelle l'élément annulaire 40 est totalement caché par la bague 50. Si l'élément annulaire 40 sert de moyen d'indication de position il a de préférence une couleur facilement remarquable, rouge ou verte, se distinguant des pièces avoisinantes du robinet. De préférence le pas de filet entre l'élément 40 et la bague 50 est plus élevé que le pas entre le filet de l'élément de fermeture mobile 14 et de l'alésage longitudinal 10-1 du corps de robinet 10 pour obtenir un plus grand mouvement vertical de la bague 50 que de l'élément de fermeture 14. Cet indicateur de position est approprié pour n'importe quel robinet à tige de commande rotative mais de préférence non-déplaçable en direction axiale.

Une bague d'étanchéité 52 est de préférence prévue entre l'élément annulaire 40, l'extrémité supérieure 10-3 du corps de robinet 10 et la tige de robinet 16.

Au-dessus de l'élément annulaire 40 le volant de commande 18 est solidarisé à la tige de robinet 16 pour rotation avec celle-ci. Le volant 18 et l'élément annulaire 40 pourraient être réalisés d'une seule pièce, mais de préférence ces deux éléments sont des pièces séparées ayant une interface commune 54. La tige de robinet 16 est de préférence pourvue d'une rainure d'affaiblissement RA située approximativement dans le plan de l'interface 54. Cette rainure d'affaiblissement (non-représentée) assure le sectionnement de la tige de robinet 16 dans le plan de l'interface 54 si une force de torsion, ou autre force, excédant une limite prédéterminée, est appliquée au volant 18. Par le sectionnement de la tige de robinet 16 à l'endroit de la rainure d'affaiblissement, c'est-à-dire à l'extérieur du corps de robinet 10 et au côté supérieur de l'élément annulaire 40 on obtient l'avantage que le mécanisme du robinet reste opérationnel et le robinet peut être fermé et ouvert par manipulation de l'élément annulaire 40 restant couplé à la tige 16.

L'invention n'est pas limitée aux modes d'exécution particuliers qui viennent d'être décrits ci-avant en détail mais en contraire, beaucoup de modifications et de variations peuvent y être apportées par le spécialiste sans pour autant quitter la portée des revendications annexées.

## Revendications

1. Robinet pour cylindre de gaz ou de gaz liquéfié, comportant un corps de robinet ayant un axe longitudinal, une extrémité d'embase et une extrémité de tête, et un alésage longitudinal débouchant à l'extrémité de tête du corps de robinet ;
un siège fixe ; et
un ensemble tige de robinet - élément de fermeture monté étanche dans l'alésage longitudinal et mobile pour ouvrir et fermer le robinet ;
**caractérisé en ce que** :
à l'intérieur de l'alésage longitudinal l'ensemble tige de robinet - élément de fermeture n'est supporté que par le corps de robinet qui l'entoure directement afin de ne présenter qu'un seul interstice annulaire interfacial à étanchéifier pour éviter une fuite de gaz à l'extrémité de tête du corps de robinet ;
l'alésage longitudinal s'étend jusqu'à l'extrémité d'embase, débouche à celle-ci et a un diamètre suffisant de sorte que l'ensemble tige de robinet - élément de fermeture puisse être installé dans le corps de robinet par l'extrémité de l'alésage longitudinal débouchant à l'extrémité d'embase du corps de robinet ; et
le siège fixe est formé sur un élément de siège séparé du corps de robinet installé dans l'alésage longitudinal par l'extrémité d'embase du corps de robinet.

2. Robinet selon la revendication 1, **caractérisé en ce que** l'élément de siège est un tube de siège allongé remplaçable vissé dans l'alésage longitudinal.

3. Robinet selon la revendication 2, **caractérisé en ce que** le tube de siège a une tête élargie accessible à l'embase du corps de robinet pour le serrage et le desserrage du tube de siège.

4. Robinet selon l'une quelconque des revendications 1 à 3, **caractérisé en ce qu'**un moyen d'étanchéité est prévu entre l'élément de siège et le corps de robinet.

5. Robinet selon l'une quelconque des revendications 2 à 4, **caractérisé en ce qu'**un passage de gaz annulaire est formé entre le tube de siège et le corps de robinet, ce passage de gaz étant en communication de l'un côté avec l'extérieur du robinet à l'extrémité d'embase et de l'autre côté avec une cavité formée dans le corps du robinet pour recevoir un clapet de sûreté.

6. Robinet selon la revendication 5, **caractérisé en ce que** le passage annulaire est formé par une longueur à diamètre réduit du tube de siège, la tête du tube de siège tant formée pour assurer la communication entre le passage annulaire et l'extérieur du robinet à l'extrémité d'embase du corps de robinet.

7. Robinet selon la revendication 1, **caractérisé en ce qu'**une surface de butée axiale faisant face axialement vers l'élément de siège est formée entre deux parties à diamètre différent de l'alésage longitudinal et une surface de contre-butée axiale est formée sur l'ensemble mobile entre la surface de butée axiale et l'élément de siège, cette surface de contre-butée axiale faisant face vers la surface de butée axiale en vue de retenir l'ensemble mobile dans l'alésage longitudinal.

8. Robinet selon la revendication 7, **caractérisé en ce que** l'ensemble mobile est ajusté dans au moins une des deux parties à diamètre différent de l'alésage longitudinal.

9. Robinet selon la revendication 8, **caractérisé en ce que** l'ensemble mobile est pourvu d'un filet externe vissé dans un filet interne d'au moins l'une des parties à diamètre différent de l'alésage longitudinal.

10. Robinet selon la revendication 9, **caractérisé en ce que** l'ensemble mobile est vissé dans la partie de plus grand diamètre de l'alésage longitudinal.

11. Robinet selon la revendication 10, **caractérisé en ce que** la partie de plus grand diamètre de l'alésage longitudinal comporte un filet interne unique dans lequel l'ensemble mobile et l'élément de siège sont vissés.

12. Robinet selon la revendication 9, 10 ou 11, **caractérisé en ce que** l'ensemble mobile comportant la tige de robinet et l'élément de fermeture est formé d'une seule pièce.

13. Robinet selon la revendication 10 ou 11, **caractérisé en ce que** l'élément de fermeture de l'ensemble mobile est une pièce séparée de la tige de robinet.

14. Robinet selon la revendication 13, **caractérisé en ce que** les deux pièces constituant l'ensemble mobile sont solidarisées en rotation l'une avec l'autre, mais l'élément de fermeture est déplaçable axialement par rapport à la tige de robinet.

15. Robinet selon la revendication 14, **caractérisé en ce que** l'élément de fermeture est vissé dans la partie à grand diamètre des parties à diamètre différent de l'alésage longitudinal et la tige de robinet est ajustée dans au moins une des deux parties à diamètre différent de l'alésage longitudinal.

16. Robinet selon la revendication 13, **caractérisé en ce que** le tube de siège est vissé dans le même filet interne de l'alésage longitudinal que l'élément de fermeture.

17. Robinet selon la revendication 13, **caractérisé en ce que** l'élément de fermeture est couplé à la tige de robinet en vue d'être déplaçable axialement avec celle-ci mais en vue de permettre une rotation de la tige de robinet par rapport à l'élément de fermeture.

18. Robinet selon la revendication 17, **caractérisé en ce que** la tige de robinet est pourvue du filet externe vissé dans la partie à petit diamètre des parties à diamètre différent de l'alésage longitudinal et **en ce que** l'élément de fermeture est ajusté dans la partie à grand diamètre des parties à diamètre différent.

19. Robinet selon l'une quelconque des revendications 7 à 13, **caractérisé en ce qu'**un moyen d'étanchéité est disposé entre l'élément mobile et l'alésage longitudinal.

20. Robinet pour cylindre de gaz ou de gaz liquéfié, comportant un corps de robinet, un ensemble tige de robinet - élément de fermeture mobile entre une position fermée et une position ouverte, et un élément annulaire solidarisé en rotation avec la tige de robinet et situé à l'extérieur du corps de robinet, **caractérisé par** une bague externe disposée autour du corps de robinet et retenue contre rotation par rapport à celui-ci, cette bague étant montée par un moyen d'engagement hélicoïdal sur l'extérieur de l'élément solidarisé en rotation avec la tige de robinet, de sorte que la bague effectue un mouvement axial télescopique par rapport à l'élément annulaire et la tige de robinet en réponse à un mouvement de rotation de la tige de robinet en vue de couvrir ou de découvrir un moyen d'indication de la position ouverte ou fermée du robinet.

21. Robinet selon la revendication 20, **caractérisé en ce que** le moyen d'indication est fixé immobile par rapport au corps de robinet.

22. Robinet selon la revendication 20 ou 21,
**caractérisé en ce que** le moyen d'engagement hélicoïdal est un filet interne de la bague et un filet externe de l'élément annulaire solidarisé en rotation à la tige de robinet.

23. Robinet selon la revendication 22, **caractérisé en ce que** l'ensemble tige de robinet - élément de fermeture est pourvu d'un filet externe en engagement avec un filet interne pratiqué à l'intérieur du corps de robinet, et **en ce que** les filets de la bague et de l'élément annulaire solidarisé en rotation à la tige de robinet ont un pas plus élevé que les filets du corps de robinet et de l'ensemble tige de robinet - élément de fermeture.

24. Robinet selon l'une quelconque des revendications 20 à 23, **caractérisé en ce que** la surface externe du corps de robinet est pourvue d'une forme hexagonale engagée par une partie interne de forme correspondante de la bague.

25. Robinet selon l'une quelconque des revendications 20 à 24, **caractérisé en ce que** le moyen d'indication de position est une surface de signalisation prévue sur la surface externe du corps de robinet, cette surface de signalisation étant cachée par la bague dans la position ouverte du robinet et exposée par le mouvement axial de la bague lorsque la tige de robinet est tournée dans une direction pour fermer le robinet.

26. Robinet selon l'une quelconque des revendications 20 à 24, **caractérisé en ce que** le moyen d'indication de position est l'élément annulaire solidarisé en rotation à la tige de robinet, cet élément annulaire ayant une autre couleur que les pièces avoisinantes du robinet et étant caché par la bague dans la position fermée du robinet et exposé par le mouvement axial de la bague lorsque la tige de robinet est tournée dans une direction pour ouvrir le robinet.

27. Robinet selon l'une quelconque des revendications 20 à 26, **caractérisé en ce qu'**un volant de commande est solidarisé à la tige de robinet en vue de la tourner.

28. Robinet selon la revendication 27, **caractérisé en ce que** le volant de commande est une pièce séparée de l'élément annulaire solidarisée en rotation à la tige de robinet, et **en ce que** la tige de robinet est pourvue d'une zone d'affaiblissement située approximativement à l'interface entre le volant de commande et l'élément annulaire.

29. '. Robinet selon la revendication 27, **caractérisé en ce que** le volant de commande et l'élément annulaire sont réalisés en une seule pièce.
